# EUROPÄISCHE PATENTANMELDUNG

(11) **EP 3 754 144 A1**
(43) Veröffentlichungstag der Anmeldung: **23.12.2020**
(21) Anmeldenummer: 20170002.8
(22) Anmeldetag: 17.04.2020
(51) Int. Cl.: E06B 3/22, E05D 5/02, F16B 5/02

(54) **ABSTANDSHALTER, MONTAGEANORDNUNG UND VERFAHREN ZUR MONTAGE EINES BESCHLAGES AN EINEM PROFIL**

(30) Priorität: 18.06.2019 DE 102019116542
(71) Anmelder: SCHÜCO International KG, 33609 Bielefeld (DE)
(72) Erfinder: RÖßLER, Michael, 04683 Naunhof (DE); STELZNER, Holger, 04357 Leipzig (DE)
(74) Vertreter: Dantz, Jan Henning

(57) **Zusammenfassung**

Ein Abstandshalter (7), insbesondere zur Montage zwischen einem Profil (1) und einem Beschlag (3), umfasst einen mit einem Innengewinde (80) versehenen Außenring (8), der in eine Aufnahme eines Profils (1) einfügbar ist, und einen mit einem Außengewinde (90) versehenen Innenring (9), der in den Außenring (8) eingeschraubt ist, wobei an dem Innenring (9) oder dem Außenring (8) ein Einsatz (93) für den Eingriff eines Werkzeuges (10) ausgebildet ist, mittels dem der Innenring (9) relativ zu dem Außenring (8) drehbar ist, um die axiale Länge des Abstandshalters (7) einzustellen. Der Abstandshalter wird insbesondere an einer Montageanordnung mit einem Profil eingesetzt, um über mindestens eine Schraube einen Beschlag zu fixieren. Ferner betrifft die Erfindung ein Verfahren zur Montage eines Beschlages an dem Profil.

## Beschreibung

Die vorliegende Erfindung betrifft einen Abstandshalter, insbesondere zur Montage zwischen einem Profil und einem Beschlag, mit einem mit einem Innengewinde versehenen Außenring, der in eine Aufnahme eines Profils einfügbar ist, und einem mit einem Außengewinde versehenen Innenring, der in den Außenring eingeschraubt ist, eine Montageanordnung und ein Verfahren zur Montage eines Beschlages an einem Profil.

Um Beschläge an Profilen aus Kunststoff zu befestigen, ist es bekannt, Schrauben in metallische Armierungsprofile einzudrehen, die in dem Kunststoffprofil eingesteckt sind. Um zu vermeiden, dass sich das Kunststoffmaterial eindrückt und somit die Klemmkräfte der Schrauben nachlassen, werden meist hülsenförmige Abstandshalter eingesetzt. Aufgrund von Fertigungstoleranzen können diese hülsenförmigen Abstandshalter zu lang oder zu kurz ausgebildet sein, so dass die Qualität der Schraubverbindung unterschiedlich ist.

Es ist daher Aufgabe der vorliegenden Erfindung, einen Abstandshalter und eine Montageanordnung mit einem solchen Abstandshalter zu schaffen, die eine stabile Befestigung eines Beschlages an einem Profil ermöglichen. Zudem soll eine effektive Montage eines Beschlages an einem Profil gewährleistet werden.

Diese Aufgabe wird mit einem Abstandshalter mit den Merkmalen des Anspruches 1, einer Montageanordnung mit den Merkmalen des Anspruches 5 sowie einem Verfahren zur Montage eines Beschlages an einem Profil mit den Merkmalen des Anspruches 8 gelöst.

Der erfindungsgemäße Abstandshalter umfasst einen Außenring und einen Innenring, die miteinander verschraubt sind, wobei an dem Innenring oder dem Außenring ein Einsatz zum Eingriff für ein Werkzeug ausgebildet ist, mittels dem der Innenring relativ zu dem Außenring drehbar ist, um die axiale Länge des Abstandshalters einzustellen. Dadurch kann der Abstandshalter in eine Aufnahme eines Profils eingesetzt werden, wobei der Abstand zwischen einem Boden der Aufnahme oder einem Armierungsprofil in axiale Richtung bezogen auf die Gewindeverbindung verstellt werden kann. Dies ermöglicht eine Befestigung eines Beschlages oder eines anderen Bauteils an dem Abstandshalter erst nach dessen Ausrichtung, beispielsweise wenn eine Oberfläche des Abstandshalters flächenbündig mit einer Oberfläche des Profils ausgerichtet ist. Dadurch kann die Qualität der Schraubverbindung verbessert werden, die sich an dem Abstandshalter abstützt.

Für eine einfache Montage kann der Eingriff für das Werkzeug als Innensechskant ausgebildet sein. Der Innensechskant kann dann in dem Innenring ausgebildet sein, so dass der Monteur lediglich das Werkzeug in den Innenring einsteckt und ausrichtet, bevor dann eine Schraube oder ein anderes Befestigungsmittel durch den Innenring durchgesteckt wird. Alternativ kann ein Werkzeugeinsatz auch an dem Außenring ausgebildet sein, beispielsweise durch mehrere stirnseitig angeordnete Öffnungen, die dann über ein Spezialwerkzeug gedreht werden können, um eine Verstellung relativ zu dem Innenring zu bewirken.

Vorzugsweise weist der Innenring oder der Außenring einen radial ausgerichteten Vorsprung oder Flansch auf, um die maximale Eindrehposition des Innenrings relativ zu dem Außenring zu begrenzen. In der maximal eingedrehten Position kann der Abstandshalter ausgeliefert zu werden, um dann auf das gewünschte Maß verstellt zu werden.

Für eine einfache Fixierung des Abstandshalters kann der Außenring am äußeren Umfang eine Profilierung oder Rändelung aufweisen. Dadurch kann der Außenring in eine Aufnahme eines Profils eingesteckt und dort verdrehsicher gehalten werden.

Bei der erfindungsgemäßen Montageanordnung ist ein Abstandshalter in eine Aufnahme eines Profils eingesetzt und wird durch eine Schraube zur Fixierung eines Beschlages durchgriffen. Eine solche Montageanordnung kann beispielsweise an einem Profil aus Kunststoff vorgesehen werden, in dem eine metallische Armierung eingefügt ist, in der eine Schraube eingedreht ist. In der Armierung kann somit ein Gewindeabschnitt der Schraube eingreifen, um die Kräfte zum Fixieren des Beschlages bereitzustellen, wobei der Abstandshalter einen Abstand zwischen einer Oberfläche der Armierung und einer äußeren Oberfläche des Profils überbrückt. Hierfür kann der Abstandshalter beispielsweise flächenbündig mit einer Oberfläche des Profils ausgebildet sein. Bei der Montageanordnung können beispielsweise Beschlagsteile, wie Türbänder, angeschraubt werden, wobei der Abstandshalter verhindert, dass das Türband in das Profil einsinkt.

Bei dem erfindungsgemäßen Verfahren zur Montage eines Beschlages an einem Profil wird zunächst eine Aufnahme an einem Profil gebohrt, wobei das Profil vorzugsweise aus Kunststoff hergestellt ist, aber auch aus Holz, Metall oder einem Verbundmaterial bestehen kann. Anschließend wird ein Abstandshalter mit einem mit einem Innengewinde versehenen Außenring und einem mit einem Außengewinde versehenen Innenring in die Aufnahme eingefügt. Danach kann ein Werkzeug an einem Einsatz des Abstandshalters eingesetzt werden, um den Innenring relativ zu dem Außenring zu drehen und somit die axiale Länge des Abstandshalters auf das gewünschte Maß einzustellen. In einem weiteren Schritt kann durch den Abstandshalter eine Schraube durchgesteckt werden, um die Schraube an dem Profil oder der Armierung zu fixieren und um ein weiteres Bauteil, wie einen Beschlag, an dem Profil festzulegen. Der Abstandshalter kann dabei für unterschiedliche Profilgeometrien universell eingesetzt werden.

Die Erfindung wird nachfolgend anhand eines Ausführungsbeispiels mit Bezug auf die beigefügten Zeichnungen näher erläutert. Es zeigen:
- Figur 1: eine Schnittansicht durch eine Montageanordnung bei der Einstellung der axialen Länge des Abstandshalters;
- Figur 2: eine erfindungsgemäße Montageanordnung in der montierten Position;
- Figur 3: eine perspektivische Explosionsdarstellung eines erfindungsgemäßen Abstandshalters;
- Figur 4: eine Seitenansicht des Abstandshalters der Figur 3 in der montierten Position;
- Figur 5: eine Schnittansicht des Abstandshalters der Figur 4;
- Figur 6: eine Ansicht eines Profils mit einem montierten Abstandshalter, und
- Figur 7: eine Ansicht eines Profils mit einem modifizierten Abstandshalter.

Ein Profil 1 aus Kunststoff besitzt eine Oberfläche 2, an der ein Beschlag 3 montiert werden soll. Das Profil 1 kann Bestandteil eines Rahmens sein, beispielsweise eines Blend- oder Flügelrahmens, an dem ein Beschlagsteil, wie ein Türband, fixiert werden soll. Der Beschlag 3 besitzt in dem dargestellten Ausführungsbeispiel im Wesentlichen eine Winkelform und besitzt mehrere Stege 4 auf der zu dem Profil 1 gewandten Seite. Die Geometrie des Beschlages 3 kann allerdings auch variieren. Zumindest ein Steg 4, vorzugsweise eine hülsenförmiger Steg 4, ist an einem Abstandshalter 7 abgestützt, der in einer Aufnahme an dem Profil 1 eingefügt ist.

Das Profil 1 weist eine Vielzahl von Hohlkammern auf, wobei in eine Hohlkammer ein Armierungsprofil 5 aus Metall eingefügt ist. Das Armierungsprofil 5 ist in dem dargestellten Ausführungsbeispiel als rechteckförmiges Hohlprofil ausgebildet, kann allerdings auch eine andere Geometrie besitzen. In einer Wand des Armierungsprofils 5 ist eine Öffnung mit einem Gewinde 6 vorgesehen.

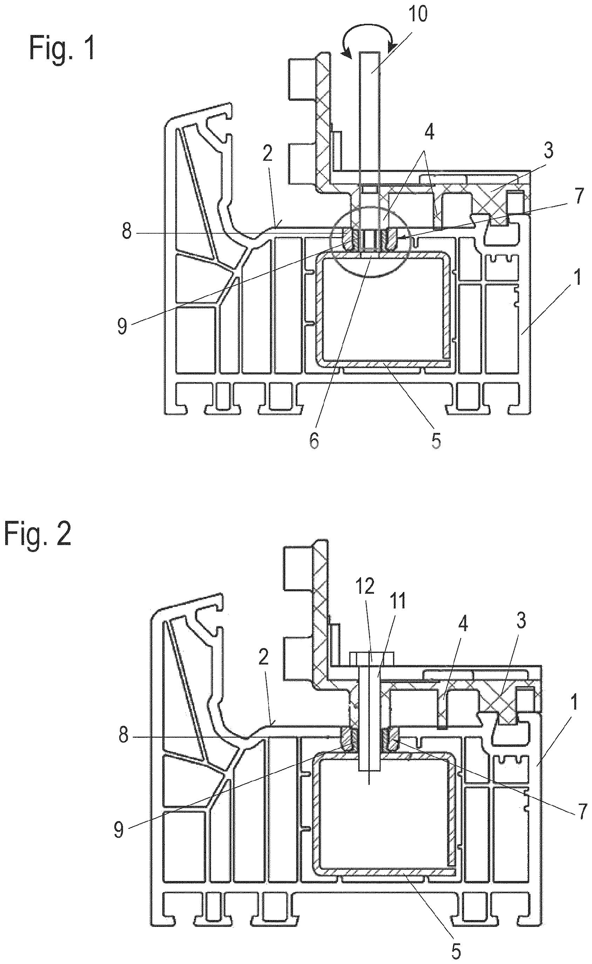

Der Abstandshalter 7 umfasst einen Außenring 8 und einen Innenring 9, die relativ zueinander drehbar und über ein Gewinde miteinander verbunden sind, um die axiale Erstreckung des Abstandshalters 7 verstellen zu können. In Figur 1 ist ein Werkzeug 10 dargestellt, dass in einem Einsatz an dem Innenring 9 eingefügt ist, beispielsweise einem Innensechskant, um den Innenring 9 relativ zu dem Außenring 8 zu drehen und dabei die axiale Erstreckung des Abstandshalters 7 zu verändern. Der Außenring 8 besitzt an seinem äußeren Umfang eine Profilierung oder eine Rändelung, die an einer Wand des Profils 1 anliegt, so dass der Außenring 8 drehfest an dem Profil 1 gehalten ist. Über das Werkzeug 10 wird der Abstandshalter 7 so verstellt, dass der Innenring 9 an einer Oberfläche des Armierungsprofils 5 anliegt, während der Außenring 8 mit einer Stirnseite flächenbündig zu der Oberfläche 2 des Profils 1 ausgerichtet ist. Die Stege 4 liegen dann auf gleicher Höhe, unabhängig davon, ob sie auf dem Abstandshalter 7 anliegen oder der Oberfläche 2 des Profils 1.

Nach der Ausrichtung des Abstandshalters 7 wird der Beschlag 3 befestigt, wie dies in Figur 2 gezeigt ist. Hierfür wird eine Schraube 11 mit einem Gewindeabschnitt durch den Abstandshalter 7 durchgesteckt und in das Gewinde 6 des Armierungsprofils 5 eingeschraubt. Über einen Schraubenkopf 12 wird gegebenenfalls unter Zwischenschaltung weiterer Elemente der Beschlag 3 an dem Profil 1 fixiert. Es können auch mehrere Schrauben 11 zur Fixierung des Beschlages 3 eingesetzt werden, wobei in Figur 2 lediglich eine dieser Schrauben 11 gezeigt ist.

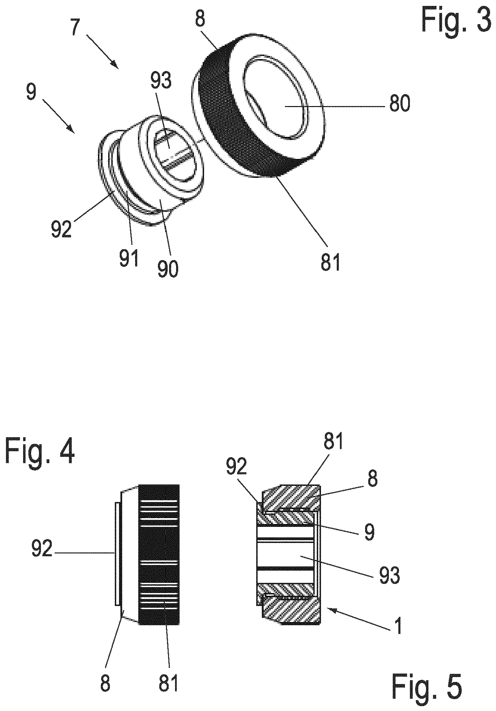

In Figur 3 ist der Abstandshalter 7 in einer Explosionsdarstellung gezeigt. Der Abstandshalter 7 umfasst einen Außenring 8 mit einem Innengewinde 80, in den ein Außengewinde 90 an dem Innenring 9 einschraubbar ist. Der Außenring 8 umfasst an seinem äußeren Umfang eine Profilierung in Form einer Rändelung 81, die beim Einstecken in eine Öffnung an dem Profil 1 hilft, dass der Außenring 8 verdrehsicher angeordnet ist.

Der Innenring 9 umfasst benachbart zu dem Außengewinde 90 einen zylindrischen Abschnitt 91, der zwischen dem Außengewinde 90 und einem radial nach außen erstreckenden Flansch 92 vorgesehen ist. Der zylindrische Abschnitt 91 kann optional auch weggelassen werden. Der Flansch 92 dient dazu, die maximale Einschraubtiefe des Innenringes 9 in den Außenring 8 zu begrenzen. Alternativ oder zusätzlich kann an dem Außenring 8 auch ein nach innen gerichteter Vorsprung oder Flansch vorgesehen sein, um die maximale Eindrehtiefe des Innenringes 9 in den Außenring 8 zu begrenzen.

In dem Innenring 9 ist ein Einsatz 93 für ein Werkzeug ausgebildet, das als Innensechskant dargestellt ist. Es ist auch möglich, einen Einsatz 93 für andere Werkzeuge vorzusehen. Zudem ist es möglich, einen Einsatz auch an einer Stirnseite des Außenringes 8 oder des Innenringes 9 vorzusehen, um eine relative Drehbewegung zwischen Innenring 9 und Außenring 8 durchzuführen.

In den Figuren 4 und 5 ist der Abstandshalter 7 in einer montierten Position gezeigt. Es ist erkennbar, dass der Innenring 9 in den Außenring 8 eingeschraubt ist und der Flansch 92 an einer Stirnseite des Außenringes 8 anliegt. In dieser Montageposition kann der Abstandshalter 7 in eine Aufnahme an einem Profil 1 eingefügt werden, um dann in axiale Richtung verstellt zu werden, um einen Abstand in der gewünschten Länge zu überbrücken.

Nach der Montage des Abstandshalters kann dieser optional auch verklebt werden. Hierfür kann ein geeigneter Gewindekleber, ein mikroverkapselter Kleber eingesetzt werden.

Der Abstandshalter 7 mit dem Außenring 8 und dem Innenring 9 besteht vorzugsweise aus Metall. Es ist aber auch möglich, diesen aus Kunststoff herzustellen, beispielsweise einem Kunststoff mit Glasfasern.

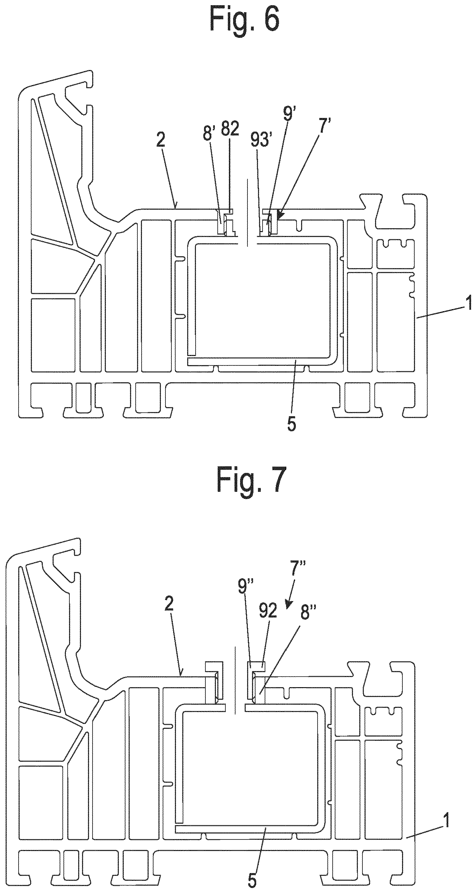

In Figur 6 ist ein modifizierter Abstandshalter 7' an dem Profil 1 montiert, der mit einem Innenring 9' an dem Armierungsprofil 5 aus Metall anliegt. Der Innenring 9' umfasst ein Außengewinde, auf das ein Außenring 8' aufgeschraubt ist. Anders als bei dem Abstandshalter 7 der Figuren 3 und 4, bei dem sich der Einsatz 93 für ein Werkzeug über die gesamte axiale Länge des Innenringes 9 erstreckt, besitzt der Innenring 9' einen nach innen ragenden Vorsprung 93', der sich nur über einen Teil der axialen Länge des Innenringes 9' erstreckt und einen Einsatz für Ein Werkzeug ausbildet, beispielsweise einen Innensechskant. Der Außenring 8' besitzt einen nach innen ragenden Vorsprung oder Flansch 82 der einen Anschlag für den Innenring 9' in axiale Richtung bildet, um die Eindrehtiefe zu begrenzen. Der Außenring 8' ist formschlüssig oder klemmend an dem Profil 1 fixiert und mit einer axialen Stirnseite flächenbündig mit der Oberfläche 2 des Profils 1 ausgerichtet.

In Figur 7 ist eine weitere Ausführungsform eines Abstandshalters 7" gezeigt, bei dem statt dem Innenring 9" der Außenring 8" an dem Armierungsprofil 5 aus Metall abgestützt ist. Der mit dem Außenring 8" verschraubte Innenring 9" besitzt einen nach außen ragenden Flansch 92 oder Vorsprung, der die Eindrehtiefe des Außenringes 8" begrenzt. Der Flansch 92 steht von dem Profil 1 an der Oberfläche 2 hervor, und kann über ein Werkzeug, beispielsweise einen Maulschlüssel gegriffen und gedreht werden, um die axiale Länge des Abstandshalter 7" zu ändern.

Optional können der Abstandshalter 7" und das Profil 1 auch so gestaltet sein, dass der Innenring 9" mit dem Flansch 92 im Wesentlichen flächenbündig mit der Oberfläche 2 ausgerichtet sind oder nur geringfügig hervorstehen, um eine Anlagefläche für einen Beschlag 3 auszubilden.

### Bezugszeichenliste

- 1: Profil
- 2: Oberfläche
- 3: Beschlag
- 4: Steg
- 5: Armierungsprofil
- 6: Gewinde
- 7, 7', 7": Abstandshalter
- 8, 8', 8": Außenring
- 9, 9', 9": Innenring
- 10: Werkzeug
- 11: Schraube
- 12: Schraubenkopf
- 80: Innengewinde
- 81: Rändelung
- 82: Flansch
- 90: Außengewinde
- 91: zylindrischer Abschnitt
- 92: Flansch
- 93: Einsatz

## Patentansprüche

1. Abstandshalter (7, 7', 7"), insbesondere zur Montage zwischen einem Profil (1) und einem Beschlag (3), mit einem mit einem Innengewinde (80) versehenen Außenring (8, 8', 8"), der in eine Aufnahme eines Profils (1) einfügbar ist, und einem mit einem Außengewinde (90) versehenen Innenring (9, 9', 9"), der in den Außenring (8, 8', 8") eingeschraubt ist, **dadurch gekennzeichnet, dass** an dem Innenring (9, 9', 9") oder dem Außenring (8, 8', 8") ein Einsatz (93) für den Eingriff eines Werkzeuges (10) ausgebildet ist, mittels dem der Innenring (9, 9', 9") relativ zu dem Außenring (8, 8', 8") drehbar ist, um die axiale Länge des Abstandshalters (7) einzustellen.

2. Abstandshalter nach Anspruch 1, **dadurch gekennzeichnet, dass** der Einsatz (93) für den Eingriff des Werkzeuges (10) als Innensechskant an dem Innenring (9, 9', 9") ausgebildet ist.

3. Abstandshalter nach Anspruch 1 oder 2, **dadurch gekennzeichnet, dass** der Innenring (9, 9', 9") einen radial hervorstehenden Vorsprung oder einen Flansch (92) aufweist, der die maximale Eindrehposition des Innenring (9, 9', 9") in den Außenring (8, 8', 8") begrenzt.

4. Abstandshalter nach einem der vorhergehenden Ansprüche, **dadurch gekennzeichnet, dass** der Außenring (8, 8', 8") am äußeren Umfang eine Profilierung oder eine Rändelung (81) aufweist, um diesen verdrehsicher in der Aufnahme des Profils (1) anzuordnen.

5. Montageanordnung mit einem Profil (1), in dem eine Aufnahme mit einem Abstandshalter (7) nach einem der vorhergehenden Ansprüche angeordnet ist, wobei der Abstandshalter (7) durch eine Schraube (11) zur Fixierung eines Beschlages (3) an dem Profil (1) durchgriffen ist.

6. Montageanordnung nach Anspruch 5, **dadurch gekennzeichnet, dass** das Profil (1) aus Kunststoff hergestellt ist, in dem eine metallische Armierung (5) eingefügt ist, in die die Schraube (11) eingeschraubt ist.

7. Montageanordnung nach Anspruch 5 oder 6, **dadurch gekennzeichnet, dass** der Abstandshalter (7) mit einer Oberfläche (2) des Profils (1) flächenbündig ausgerichtet ist.

8. Verfahren zur Montage eines Beschlages (3) an einem Profil (1) mit den folgenden Schritten:
- Bohren einer Aufnahme an dem Profil (1);
- Einfügen eines Abstandshalters (7) mit einem mit einem Innengewinde (80) versehenen Außenring (8, 8', 8") und mit einem Außengewinde (90) versehenen Innenring (9, 9', 9");
- Einfügen eines Werkzeuges (10) in einen Einsatz (93) an dem Innenring (9, 9', 9") oder dem Außenring (8, 8', 8") und Verstellen der axialen Länge des Abstandshalters (7) durch Drehen des Innenringes (9, 9', 9") relativ zu dem Außenring (8, 8', 8");
- Durchstecken einer Schraube (11) durch den Abstandshalter (7), und
- Fixieren des Beschlages (3) an dem Profil (1).
